(19) 

**Europäisches Patentamt**
**European Patent Office**
**Office européen des brevets**

(11) **EP 1 133 836 B1**

(12) **EUROPEAN PATENT SPECIFICATION**

(45) Date of publication and mention
of the grant of the patent:
**13.11.2013 Bulletin 2013/46**

(51) Int Cl.:
*H04B 7/00* *(2006.01)*      *H04B 17/00* *(2006.01)*
*H04B 7/02* *(2006.01)*      *H01Q 3/26* *(2006.01)*
*H01Q 1/24* *(2006.01)*

(21) Application number: **98965970.1**

(22) Date of filing: **24.11.1998**

(86) International application number:
**PCT/US1998/025364**

(87) International publication number:
**WO 2000/031892 (02.06.2000 Gazette 2000/22)**

(54) **METHOD AND APPARATUS FOR CALIBRATING A WIRELESS COMMUNICATIONS STATION HAVING AN ANTENNA ARRAY**

VERFAHREN UND VORRICHTUNG ZUR KALIBRIERUNG EINER DRAHTLOSEN KOMMUNIKATIONSSTATION MIT EINER GRUPPENANTENNE

PROCEDE ET APPAREIL DE CALIBRAGE D'UNE STATION DE RADIOCOMMUNICATION A RESEAU D'ANTENNES

(84) Designated Contracting States:
**DE FR GB**

(43) Date of publication of application:
**19.09.2001 Bulletin 2001/38**

(73) Proprietor: **Intel Corporation**
**Santa Clara, CA 95052 (US)**

(72) Inventors:
• **PARISH, David, M.**
**New York 14226 (US)**
• **FARZANEH, Farhad**
**San Francisco, CA 94110 (US)**
• **BARRATT, Craig, H.**
**Redwood City, CA 94062 (US)**

(74) Representative: **Talbot-Ponsonby, Daniel**
**Frederick et al**
**Marks & Clerk LLP**
**Fletcher House**
**Heatley Road**
**The Oxford Science Park**
**Oxford OX4 4GE (GB)**

(56) References cited:
**US-A- 5 515 378**      **US-A- 5 543 801**
**US-A- 5 546 090**      **US-A- 5 546 090**

• **AUMANN H M ET AL: "PHASED ARRAY ANTENNA CALIBRATION AND PATTERN PREDICTION USING MUTUAL COUPLING MEASUREMENTS" IEEE TRANSACTIONS ON ANTENNAS AND PROPAGATION, IEEE INC. NEW YORK, US, vol. 37, no. 7, 1 July 1989 (1989-07-01), pages 844-850, XP000035980 ISSN: 0018-926X**

EP 1 133 836 B1

**Description**

**BACKGROUND OF THE INVENTION**

*Field of the Invention*

This invention relates to radio frequency systems using antenna arrays, and more specifically to the calibration of such systems.

*Background*

Antenna arrays may be used in any type of system that transmits or receives radio frequency signals using an antenna or antennas. Examples of such systems are radio communication systems, radars, and certain medical systems that employ radio frequency signals. The use of antenna arrays in such systems provides for antenna performance improvements over the use of a single element antenna. These antenna performance improvements include improved directionality, signal to noise ratio, and interference rejection for received signals, and improved directionality, security, and reduced transmit power requirements for transmitted signals. Antenna arrays may be used for signal reception only, for signal transmission only, or for both signal reception and transmission.

Typical antenna array systems consist of an array of antennas and a signal processor that combines the signals going to and coming from the individual array elements. This processing sometimes is called *beamforming.*

A typical application of antenna array systems is in a wireless communication system. Examples include a cellular communication system and a wireless local loop system. Such wireless communication systems consist of one or more communications stations, generally called base stations, each communicating with its subscriber units, also called remote terminals and handsets. In cellular systems, the remote terminal typically is mobile, while in a wireless local loop system the remote unit typically is in a fixed  location. The antenna array typically is at the base station. Terminology for the direction of communication comes from conventional satellite communications, with the satellite replaced by the base station. Thus, communication from the remote terminal to the base station is called the uplink, and communications from the base station to the remote terminal is called the downlink. Thus, the antenna array transmits in the downlink direction and receives in the uplink direction. Antenna arrays also may be used in wireless communication systems to add spatial division multiple access (SDMA) capability, which is the ability to communicate with several users at the time over the same "conventional" (FDMA, TDMA or CDMA) channel. We have previously disclosed spatial processing with antenna arrays to increase the spectrum efficiency of SDMA and non-SDMA systems. See U.S. Patent 5,515,378 issued 7 May 1996 entitled *Spatial Division Multiple Access Wireless Communications System,* U.S. Patent 5,592,490 issued 7 January 1997 entitled *Spectrally Efficient High Capacity Wireless Communications Systems*, U.S. Patent application Serial Number 08/735,520 filed October 23, 1996, entitled *Spectrally Efficient High Capacity Wireless Communications Systems with Spatio-Temporal Processing* and U.S. Patent application Serial Number 08/729.390 filed October 11, 1996, entitled *Method and Apparatus for Decision Directed Demodulation Using Antenna Arrays and Spatial Processing.* Systems that use antenna arrays to improve the efficiency of communications and/or to provide SDMA sometimes are called *smart antenna* systems. The above patents and patent applications are collectively referred to herein as "Our Smart Antenna Invention Documents."

With smart antenna communication systems, during uplink communications, one applies amplitude and phase adjustments to each of the signals received at the antenna array elements to select (*i.e*., preferentially receive) the signals of interest while minimizing any signals or noise not of interest- that is, the interference. Such amplitude and phase adjustment can be described by a complex valued weight, the receive *weight*, and the receive weights for all elements of the array can be described by a complex valued vector, the *receive weight vector.* Similarly, the downlink signal is processed by adjusting the  amplitude and phase of the signals that are going to each of the antennas of the antenna array for transmission. Such amplitude and phase control can be described by a complex valued weight, the transmit weight, and the weights for all elements of the array by a complex valued vector, the transmit weight vector. In some systems, the receive (and/or transmit) weights include temporal processing, and in such cases, the receive (and/or transmit) weights may be functions of frequency and applied in the frequency domain or, equivalently, functions of time applied as convolution kernels.

Typically, the receive weight vector is determined from the spatial signature of a particular remote user, which in turn is determined by different techniques, for example from the uplink signals received at the antennas of the array from that remote user. The spatial signature (also called the receive manifold vector) characterizes how the base station array receives signals from a particular subscriber unit in the absence of any interference or other subscriber units. In normal operation, the receive weight vector may be determined by the spatial signature and any interference. The transmit weight vector used to communicate in the downlink with a particular user is also determined from the spatial signature of the particular user. It is thus desirable to determine the transmit weight vector from the receive weight vector for a particular user.

Time division duplex (TDD) systems are those in which uplink and downlink communications with a particular remote user occur at the same frequency but different time slots. Frequency division duplex (FDD) systems are those in which uplink and downlink communications with a particular remote user occur at the different frequencies.

Practical problems may make determining the transmit weight vector from the receive weight vector for a particular user difficult to do. Because of the well known principle of reciprocity, it might be expected that determining the transmit weight vector from the receive weight vector might be straightforward. However, in the uplink, the received signals that are being processed may be somewhat distorted by the receive apparatus chains associated with each of the antenna elements of the antenna array. The receive apparatus chain includes the antenna element, cables, filters, RF electronics, physical connections, and analog-to-digital converter ("ADC") if processing is digital. In the case of a multielement antenna array, there typically is a separate receive apparatus chain for each antenna array element, and thus the amplitude and the phase each of the received signals at each element may be distorted differently by each of the receive apparatus chains. A receive weight vector that does not take this into account will be in error, causing less than optimal reception at the base station. However, in practice, communications will still be possible. When one transmits downlink signals through the antenna array, each of the signals radiated by an antenna element goes through a different transmit apparatus chain, thus possibly causing different amplitude and phase shifts in the transmitted signals. If the transmit weight vector was derived from a receive weight vector that did not take the differences in the receive apparatus chains into account, transmission from the base station may be hard to achieve. Further difficulty may result if the transmit weight vector does not take differences in the transmit apparatus chains into account, possibly making communication using such a transmit weight vector not optimal. The purpose of calibration is to determine calibration factors for compensating for the different amplitude and phase errors that occur in the signals in the receive chain and the different amplitude and phase errors that occur in the transmit chain. It should be added that the phase and amplitude shifts that occur in the receive and transmit apparatus chains are, in general, frequency dependent.

Determining the transmit weight vectors from the receive weight vectors for a particular user is more difficult in the case of an FDD system because reciprocity may no longer be assumed. One needs to additionally take into account the differences in propagation in the uplink and downlink. Once one does take such differences into account, there still is a need to determine calibration factors for compensating for the different amplitude and phase errors that occur in the signals in the receive chain and the different amplitude and phase errors that occur in the transmit chain.

Originally, manufacturers of antenna array systems used signal processors that assumed ideal antenna arrays in which all transmit and receive electronics were assumed to be perfect, or in which the transmit and receive apparatus chains were assumed to be identical for each of the antennas. As a result, these antenna array systems were not only difficult to design and manufacture, they were prohibitively expensive and subject to errors, interference, and drifts over time. Using receive weights for determining transmit weights may not lead to effective communications with such a system.

It is known that compensation can be achieved by convolving each of the m signals received or transmitted by the antenna elements by a complex calibration function (*i.e.*, by a complex valued time sequence), where each calibration function describes the transfer function correction required to compensate for the gain and phase errors a signal undergoes when passing through the transmit (or receive) apparatus chains. In some systems, this can be simplified to multiplicative correction, where each calibration function is a calibration factor-a complex valued number that describes the required amplitude and phase correction required for compensation. In general, the set of calibration functions are the elements of a calibration vector function, one complex valued calibration vector function for the transmit path, and one for the receive path, where each function is a time sequence. In the case of multiplicative correction, the set of calibration factors are the elements of a calibration vector, one complex valued calibration vector for the transmit path, and one for the receive path. Prior-art methods for determining array calibration vector functions involve measurements that have several associated drawbacks. Firstly, the methods require external measuring equipment which may be expensive, unwieldy and cumbersome to use repeatedly. Secondly, conventional calibration methods are sensitive to drifts in system parameters, such as frequency references, over the extended period of time during which measurements are being taken, and these drifts result in inaccuracies in the measured array calibration vector. In addition, some prior art techniques only determine multiplicative rather than convolution kernel calibration factors, and there are frequency dependent components in the antenna array. In order to eliminate this frequency dependence and still use multiplicative calibration vectors, it is necessary to calibrate the antenna array for each frequency channel of communication. Thirdly, the transfer characteristics of the RF electronics depend on changing ambient conditions such as temperature, humidity, *etc*., which makes it essential that antenna arrays be repeatedly calibrated in their ambient environment.

Harrison *et al.* disclose in U.S. Patent Number 5,274,844 (Dec. 28, 1993) a method for calibrating transmit and receive calibration vectors (as complex valued vector transfer functions) in two experiments which involve a data bus connecting a resource controller to a remote terminal. In the first experiment, the data bus indicates to the remote terminal to send a known signal to the base station. This determines the receive apparatus chain calibration. In a second experiment, the signals received at the remote terminal are sent back to the resource controller via the data bus to enable determining the transmit apparatus chain calibration.

Co-owned U.S. Patent 5,546,090, issued 13 August 1996, and assigned to the assignee of the present invention, discloses a calibration method which can determine both transmit and receive calibration vectors using a simple transponder co-located with the remote terminal that re-transmits to the base station the signals received at the remote terminal from the base station. Such a method does not require the wired data-bus of the Harrison *et al.* invention. Still, additional transponder equipment is required.

While these prior art calibration methods provide separate calibrations for the receive and transmit paths, and also calibrate for the different air paths between the base station antenna elements and the subscriber unit, the methods require special calibration apparatus.

PCT Patent application publication WO 95/34103 (published December 14, 1995) entitled *Antenna array calibration,* Johannisson, *et al.,* inventors, discloses a method and apparatus for calibrating the transmission (and reception) of an antenna array. For transmit calibration, an input transmit signal is inputted into each antenna element one antenna at a time. After the input transmit signal has passed through a respective power amplifier, the signal transmitted by each antenna element is sampled by a calibration network. The resulting signal is fed into a receiver, and a computation means relates the received signal with the original transmit signal for each antenna element. Correction factors can then be formed for each antenna element. The antenna elements may then be adjusted (in amplitude and phase, or in-phase $I$ and quadrature $Q$ components) using the correction factors so as to ensure that each element is properly calibrated during transmission. For receive calibration, an known input signal is generated and injected using a calibration network (a passive distribution network) into each antenna element of the antenna array. The signals pass from the antenna elements trough respective low noise amplifiers, and the signals thus received by each antenna element are measured by a beam forming apparatus. The beam forming apparatus can then generate correction factors by comparing the injected signal with the measured signals so as to individually calibrate each antenna element The correction can be described as amplitude and phase corrections, or as corrections in in-phase $I$ and quadrature $Q$ components.

While the Johannisson et al. method provides separate calibrations for the receive and transmit paths, the method requires special calibration apparatus.

Aumann, H. et al., "Phase Array Antenna Calibration and Pattern Prediction Using Mutual Coupling Measurements", IEEE Transactions on Antennas and Propagation 37 (1989) July, No. 7, discloses that calibration of phase array modules can be broken up into two parts, that is, determination of the module insertion attenuation and phase, and determination of the module attenuator and phaser transfer functions. Depending on the hardware configuration, separate transmit and receive parameters may have to be determined. All of these calibrations can be performed by mutual coupling rneasurements. In order to carry out the mutual coupling measurements described, a phased array must meet two requirements. The first requirement is that the array elements are uniformly spaced and have identical, symmetric radiation patterns. The second requirement is that the array have an ability to transmit with one element and simultaneously receive with another element. Ordinarily, this second requirement implies separate transmit and receive beamforming networks.

US Patent No.5,546,090 discloses a calibration system comprising an antenna array including a plurality of antennas for transmitting a first plurality of signals and for receiving a second plurality of signals. Signal processing means generates the first plurality of signals and receives and individually separates the second plurality of signals. Transponder means is positioned in the field of the transmitted first plurality of signals for receiving the signals and in response thereto retransmitting the second plurality of signals back to the antenna array. The second plurality of signals as received by the antenna array is then applied to the signal processing means which separates the signals into individually identifiable second signals associated with individual antennas. The individually identifiable signals are then analyzed in conjunction with the first transmitted signals to produce transmit calibration vectors and receive calibration vectors which can be defined as the relative phase and amplitude of identical signals transmitted or received through the antenna array elements.

Thus there is a need in the art for a calibration method and apparatus which is simple, both in terms of the equipment necessary and the time required, so that calibration can be performed repeatedly and rapidly wherever and whenever desired. There also is a need in the art for a simple calibration technique that only uses existing base station electronics and does not require special calibration hardware. There also is a need in the art for a method that enables one to determine transmit weight vectors from receive weight vectors, including calibrating for the receive apparatus and transmit apparatus chains, the calibration obtained using simple techniques that use existing base station electronics and do not require special calibration hardware.

SUMMARY OF THE INVENTION

In accordance with one aspect of the present invention there is provided a method for calibrating a communications station. The method comprises: switching from a normal mode to a calibration mode by a digital signal processor of a communications station having an antenna array with a plurality of antenna elements, each antenna element i being included in a transmit apparatus chain and a receiver apparatus chain, the relative phase and amplitude of each transmit apparatus chain essentially describable by a transmit apparatus chain transfer function $T_i$ for that transmit apparatus chain, the relative phase and amplitude of each receiver apparatus chain essentially describable by a receiver apparatus chain transfer function $R_i$ for that receiver apparatus chain; transmitting a first signal through the transmit apparatus chain of a first antenna element in the antenna array and from the first antenna element; receiving the first signal at remaining antenna elements other than the first antenna element and through the receiver apparatus chain of each said remaining antenna element; transmitting a respective signal through the transmit apparatus chain of each of the remaining antenna elements of the antenna array other than the first antenna element and receiving the respective signal in the receiver apparatus chains of each of the remaining antenna elements other than the transmitting antenna element until all antenna elements of the antenna array for which calibration factors are to be determined have transmitted their respective signals; determining a signal ratio $Q_{ij}=S_{ij}/S_{ji}$ for each combination of antenna elements i,j, where $S_{ij}$ is the signal transmitted through the $i^{th}$ transmit apparatus chain and from the $i^{th}$ antenna element and received at the $j^{th}$ antenna element and through the $j^{th}$ receiver apparatus chain; determining, for each antenna element i, a calibration factor $H_i$ relative to the first antenna element defined by $H_i=R_i/T_i$ using the determined signal ratios and relationship $Q_{ij}=H_j/H_i$; scaling the determined calibration factor by a value via an automatic gain compensation circuit; and switching from the calibration mode to the normal mode by the digital signal processor.

In accordance with another aspect of the present invention there is provided a communications station comprising: an antenna array having a plurality of antenna elements; a transmit apparatus chain associated with each antenna element i, each transmit apparatus chain including its associated antenna element, the relative phase and amplitude of each transmit apparatus chain essentially describable by a transmit apparatus chain transfer function $T_i$ for that transmit apparatus chain; a receiver apparatus chain associated with each antenna element i, each receiver apparatus chain including its associated antenna element, the relative phase and amplitude of each receiver apparatus chain essentially describable by a receiver apparatus chain transfer function $R_i$ for that receiver apparatus chain; a memory coupled to the receiver apparatus chains to store received signals; a signal processor coupled to the memory and adapted to switch between a normal mode and a calibration mode of the communications station; and transmitting means configured, when the communications station is in the calibration mode, to transmit a first signal through the transmit apparatus chain of a first antenna element in the antenna array and from the first antenna element, such that the first signal is received at remaining antenna elements other than the first antenna element and through the receiver apparatus chain of each said remaining antenna element. The transmitting means is further configured to transmit a respective signal through the transmit apparatus chain of each of the remaining antenna elements of the antenna array other than the first antenna element and received in the receiver apparatus chains of each of the remaining antenna elements other than the transmitting antenna element until all antenna elements of the antenna array for which calibration factors are to be determined have transmitted their respective signals. The signal processor is further configured: to determine a signal ratio $Q_{ij}=S_{ij}/S_{ji}$ for each combination of antenna elements i,j, where $S_{ij}$ is the signal transmitted through the $i^{th}$ transmit apparatus chain and from the $i^{th}$ antenna element and received at the $j^{th}$ antenna element and through the $j^{th}$ receiver apparatus chain; and to determine, for each antenna element i, a calibration factor $H_i$ relative to the first antenna element defined by $H_i=R_i/T_i$ using the determined signal ratios and relationship $Q_{ij}=H_j/H_i$. The communications station further comprises automatic gain compensation circuitry to scale the calibration factor.

**BRIEF DESCRIPTION OF THE DRAWINGS**

Figure 1 shows an antenna array system using a single antenna array for both transmitting and receiving, on which and for which embodiments of the invention may be implemented;

Figure 2 shows a simplified block diagram of a PHS base station on which an embodiment of the invention is implemented;

Figure 3(a) shows the intra-array propagation paths of an antenna array, a four element array in Figure 3(a) and a five element array in Figure 3(b);

Figure 4 shows the flow chart of one aspect of the invention: a method for determining calibrated transmit weights from receive weights and calibration factors.

Figure 5 shows the flow chart of an embodiment of the calibration method of the invention.

## DESCRIPTION OF THE PREFERRED EMBODIMENT

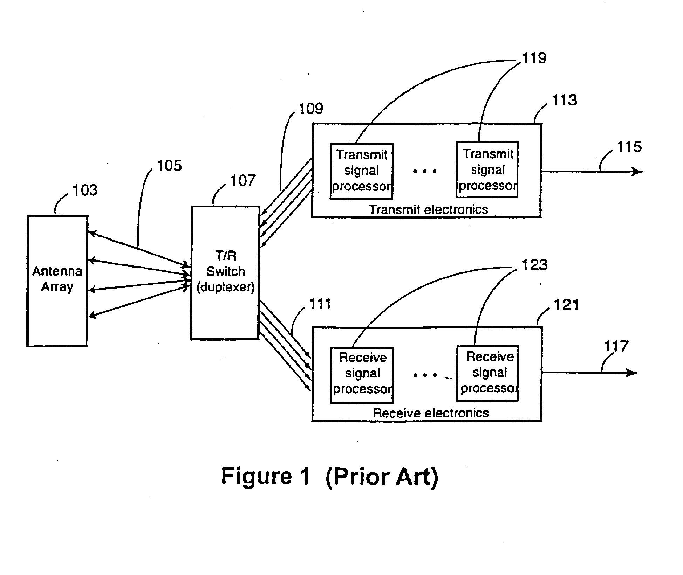

Figure 1 shows an antenna array base station system using a single antenna array **103,** which is used for both transmitting and receiving. The preferred embodiment of the method and apparatus of the present invention is implemented for operating with a system having this general configuration. While systems similar to that shown in Figure 1 may be prior art, a system such a that of Figure 1 with elements programmed or hard wired to carry aspects of the present invention is not prior art. In Figure 1, a transmit/receive ("TR") switch **107** is connected between antenna array **103** and both transmit electronics **113** (including one or more transmit signal processors **119**), and receive electronics **121** (including one or more receive signal processors **123**), for selectively connecting one or more elements of antenna array **103** to the transmit electronics **113** when in the transmit mode and to receive electronics **121** when in the receive mode. Two possible implementations of switch **107** are as a frequency duplexer in a frequency division duplex (FDD) system, and as a time switch in a time division duplex (TDD) system. The preferred embodiment of this invention uses TDD.

The transmit and receive electronics, (elements **113** and **121,** respectively) may be implemented using analog electronics, digital electronics, or a combination of the two. Signal processors **119** and **123** may be static (always the same), dynamic (changing depending on desired directivity), or smart (changing depending on received signals), and in the preferred embodiments are adaptive. Signal processors **119** and **123** may be the same one or more DSP devices with different programming for the reception and transmission, or different DSP devices, or different devices for some functions, the same for others.

Unfortunately, due to normal manufacturing variance in the construction of antenna array **103,** cables **105, 109** and **111,** respectively, and transmit and receive electronics chains **113** and **121,** respectively, there will be differing errors and non-linearities introduced by these components, and identical signals passing through the different elements of antenna array **103** will emerge with different amplitudes and phases. Similarly, identical signals passing through different channels in cables **109** and **111,** respectively, and electronics **113** and **121,** respectively, will be altered in amplitude and phase. These composite amplitude and phase errors can be captured by a set of receive and transmit array calibration transfer functions, the elements of which can be lumped together to form a receive and a transmit calibration transfer function vector. Each element of antenna array **103,** the corresponding channel of cables **105** and **109,** the corresponding channel of switch **107,** and the corresponding channel of transmit electronics **113** shall be referred to as the *transmit apparatus chain* of the transmit antenna element, and each element of antenna array **103,** the corresponding channel of cables **105** and **109,** the corresponding channel of switch **107,** and the corresponding channel of receive electronics **123** shall be referred to as the *receiver apparatus chain* of the antenna element. Such an array calibration transfer vector transmutes the *actual* signals that are seen at the end of each chain from an antenna array element into corresponding signals that are *expected* at the end of each chain if all components were identical and behaved perfectly. Because the transmit signals and the receive signals follow somewhat different hardware paths, the system will have both a transmit and a receive array calibration vector transfer function. The input to the transmit apparatus chain is transmit signal input **115,** and the output of the receiver apparatus chain is receive signal output **117.**

The various preferred embodiments of the present invention are for incorporation in a cellular system using the "Personal Handyphone System" (PHS), ARIB Standard, Version 2 (RCR STD-28). The base station of a PHS system used in these embodiments generally conforms to Figure 1. The PHS system is an 8 slot time division multiple access (TDMA) system with true time division duplex (TDD). Thus, the 8 timeslots are divided into 4 transmit (TX) timeslots and 4 receive (RX) timeslots. This implies that for any particular channel, the receive frequency is the same as the transmit frequency. It also implies reciprocity, i.e., the propagation path for both the downlink (from base station to users' remote terminals) and the uplink (from users' remote terminals to base station) is identical, assuming minimum motion of the subscriber unit between receive timeslots and transmit timeslots. The frequency band of the PHS system used in the preferred embodiment is 1895-1918.1 MHz. Each of the 8 timeslots is 625 microseconds long. The PHS system has a dedicated frequency and timeslot for a control channel on which call initialization takes place. Once a link is established, the call is handed to a service channel for regular communications. Communication occurs in any channel at the rate of 32 kbits per second (kbps), called full rate. Less than full rate communication is also possible, and the details of how to modify the embodiments described herein to incorporate less than full rate communication would be clear to those of ordinary skill in the art.

In the PHS used in the preferred embodiment, a *burst* is defined as the finite duration RF signal that is transmitted or received over the air during a single timeslot. A *group* is defined as one set of 4 TX and 4 HANDYPHONE timeslots. A group always begins with the first TX timeslot, and its time duration is 8 x 0.625 = 5 msec.

The PHS system uses $\pi/4$ differential quaternary (or quadrature) phase shift keying ($\pi/4$ DQPSK) modulation for the baseband signal. The baud rate is 192 kbaud. That is, there are 192,000 symbols per second.

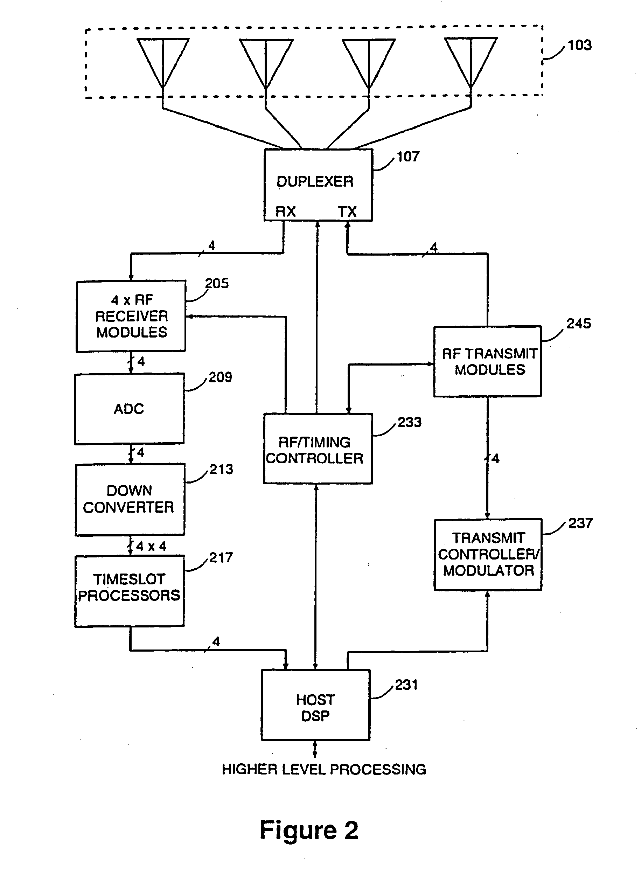

Figure 2 shows a simplified block diagram of a PHS base station on which an embodiment of the invention is implemented. Again, while systems with architectures similar to that shown in Figure 2 may be prior art, a system such a that of Figure 2 with elements programmed or hard wired to carry aspects of the present invention is not prior art. In Figure 2, a plurality of *m* antennas **201** is used, where *m* = 4. The outputs of the antennas are connected to a duplexer switch **107,** which in this TDD system is a time switch. When receiving, the antenna outputs are connected via switch **107** to a receiver **205,** and are mixed down in analog by RF receiver ("RX") modules **205** from the carrier frequency (around 1.9 GHz) to a final intermediate frequency ("IF") of 384 kHz. This signal then is digitized (sampled) by analog to digital converters ("ADCs") 209 at 1.536 MHz. Only the real part of the signal is sampled. Thus, in complex phasor notation, the digital signal can be visualized as containing the complex valued IF signal at 384 kHz together with an image at -384 kHz. Final down-converting to baseband is carried out digitally by multiplying the 1.536 megasamples per second real-only signal by a 384 kHz complex phasor. The result is a complex valued signal that contains the complex valued baseband signal plus an image at-2 x 384 =-768 kHz. This unwanted negative frequency image is filtered digitally to produce the complex valued baseband signal sampled at 1.536 MHz. In the preferred embodiment, GrayChip Inc. GC2011 digital filters are used to implement the down-converting and the digital filtering, the latter using finite impulse response (FIR) filtering techniques. This is shown as block 213.

There are four downconverted outputs from each antenna's GC2011 digital filter device **213,** one per receive timeslot. For each of the four receive timeslots, the four downconverted outputs from the four antennas are fed to a digital signal processor (DSP) device **217** (hereinafter "timeslot processor") for further processing, including calibration, according to one aspect of this invention. In the preferred embodiment, four Motorola DSP56303 DSPs are used as timeslot processors, one per receive timeslot.

The timeslot processors **217** perform several functions including the following: received signal power monitoring, frequency offset estimation and time  alignment, smart antenna processing including determining weights for each antenna element to determine a signal from a particular remote user, and demodulation of the determined signal.

The output of the timeslot processor **217** is demodulated burst data for each of the four receive timeslots. This data is sent to host DSP processor **231** whose main function is to control all elements of the system and interface with the higher level processing, which is the processing which deals with what signals are required for communications in all the different control and service communication channels defined in the PHS communication protocol. In the preferred embodiment, host DSP **231** is a Motorola DSP56303. In addition, timeslot processors send the determined receive weights to host DSP **231.** The main functions of host DSP **231** specifically include:

- maintaining state and timing information;

- receiving uplink burst data from timeslot processors **217;**

- programming timeslot processors **217,** including, in one embodiment, instructing timeslot processors **217** to enter calibration mode. Calibration mode occurs after the base station has assigned a traffic channel to the remote user. In calibration mode, in the preferred embodiment, the base station takes one RX timeslot in four consecutive frames in the newly assigned traffic channel, and performs the calibration method of the preferred embodiment described herein. The calibration experiment preferably is performed only during RX timeslots because during TX timeslots, the master base station could be transmitting and could saturate the low noise amplifiers in the system. In alternative embodiments, the calibration experiment is performed during TX timeslots. In calibration mode, at the conclusion of each frame, partial results are uploaded from timeslot processors **217** to host DSP **231** for further processing to determine calibration factors. Host DSP **231** then scales the calibration  factors with values read from the automatic gain compensation ("AGC") circuitry and then saves the data;

- in normal mode, processing the uplink signals, including de-encrypting, de-scrambling, error correcting (CRC) code checking, and burst deconstruction of the uplink;

- in normal mode, formatting the uplink signal to be sent for higher level processing in other parts of the base station;

- in normal mode, formatting adaptive differential pulse code modulated ("ADPCM") voice data and formatting service data for further higher processing in the base station;

- in normal mode, receiving downlink messages and ADPCM voice data (and bearer service data) from the other parts of the base station;

- in normal mode, processing of downlink bursts (burst construction, CRC, scrambling and encryption);

- formatting and sending downlink bursts to a transmit controller/modulator, shown as **237,** including, when in calibration mode, formatting and sending calibration bursts to transmit controller/modulator **237.**

- programming transmit controller/modulator **237,** including determining and sending transmit weight vectors to the transmit controller/modulator **237.** In one embodiment, in normal mode, the transmit weight vectors are the receive weight vectors, corrected in host DSP **231** using the calibration factors determined during calibration mode according to the preferred embodiment of the method of the invention. The transmit weight vector is then scaled as a whole to comply with the desired transmit power limitations and then sent to transmit controller/modulator **237;**

- controlling the RF controller shown as **233;** and

- in normal mode, maintaining and reporting modem status information, and controlling synchronization.

RF controller **233** interfaces with the RF system, shown as block **245** and also produces a number of timing signals that are used by both the RF system and the modem. The specific tasks performed by RF controller **233** include:

- producing timing signals for the RF system (RX and TX) and other parts of the modem;

- reading transmit power monitoring values;

- writing transmit power control values;

- producing the duplexer **107** switch box control signal; and

- reading automatic gain control (AGC) values.

RF controller **233** receives timing parameters and other settings for each burst from the host DSP **231.**
Transmit controller/modulator **237,** receives transmit data from host DSP **231,** four symbols at a time. The transmit controller uses this data to produce analog IF outputs which are send to the RF transmitter (TX) modules **245.** The specific operations transmit controller/modulator **237** performs are:

- converting data bits into a complex modulated signal using ($\pi$/4 DQPSK modulation;

- up-converting to a IF frequency of 1.536 MHz (still digital). This is carried out using a GrayChip 2011;

- 4-times over-sampling the 1.536 MHz IF signal to yield a 6.144 megasample/sec signal. Note that four-times over-sampling the IF signal results in a 32-times sampled signal overall;

- multiplying this 4-times over-sampled (compared to IF) complex signal by transmit weights obtained from host DSP **231.** The real part of the resulting complex valued waveforms is taken to yield four real only IF signals; and.

- converting these signals via digital to analog converters ("DACs") which are part of transmit controller/modulator **237** to analog transmit waveforms which are sent to transmit modules **245;**

Transmit modules **245** upconvert the signals to the transmission frequency and amplify the signals. The amplified transmission signal outputs are sent to antennas **201** via duplexer/time switch **107.**
The following notation is used. Let there be $m$ antenna elements ($m$=4 in the preferred embodiment) and let $z_1(t)$, $z_2(t)$,..., $z_m(t)$ be the complex valued responses (that is, with in-phase $I$ and quadrature $Q$ components) of the first, second, ..., $m$'th antenna elements, respectively, after down-conversion, that is, in baseband, and after sampling. In the above notation, $t$ is discrete. These $m$ time-sampled quantities can be represented by a single $m$-vector $z(t)$ with the $i$'th row of $z(t)$ being $z_i(t)$. A finite number of samples is collected, so that $z_1(t)$, $z_2(t)$,..., $z_m(t)$ can each be represented as a row vector and $z(t)$ can be represented by a matrix. Such details of incorporating a finite number of samples are however left out of this discussion, and how to include these details would be clear to those of ordinary skill in the art. Suppose several signals are sent to the base station from several remote users. In particular, suppose that a subscriber unit of interest transmits signal $s(t)$. Spatial processing includes taking a particular combination of the $I$ values and of the $Q$ values of the received signals $z_1(t)$, $z_2(t)$, ..., $z_m(t)$ in order to extract an estimate of the transmitted signal $s(t)$. Such weights may be represented by the *receive weight vector* for the this particular subscriber unit, denoted by a complex valued weight vector $w_r$, with $i$th element $w_{ri}$. The estimate of the signal sent is then

$$\hat{s}(t) = \sum_{i=1}^{m} w'_{ri} z_i(t) = \mathbf{w}_r^H \mathbf{z}(t)$$

where $w'_{ri}$ is the complex conjugate of $w_{ri}$ and $\mathbf{w}_r^H$ is the Hermitian transpose (that is, the transpose and complex conjugate) of receive weight vector $w_r$. In embodiments which include spatio-temporal processing, each element in the receive weight vector is a function of time, so that the weight vector may be denoted as $w_r(t)$, with $i^{th}$ element $w_{ri}(t)$. The estimate of the signal may then be expressed as

$$\hat{s}(t) = \sum_{i=1}^{m} w'_{ri}(t) * z_i(t)$$

where the operator "*" is the convolution operation. Forming the estimate of the signal using spatio-temporal processing may equivalently be carried out in the frequency (Fourier transform) domain. Denoting the Frequency domain representations of $s(t)$, $z_i(t)$, $w_{ri}(t)$, $z(t)$, and $w_r(t)$ by $S(k)$, $Z_i(k)$, $W_i(k)$, $Z(k)$, and $W_r(k)$, respectively, where $k$ is the discrete frequency value,

$$\hat{S}(k) = \sum_{i=1}^{m} W'_{ri}(k) Z_i(k) = \mathbf{W}_r^H \mathbf{Z}(k).$$

In the remainder of the description, whenever complex valued receive weight vector $w_r$ or its elements are mentioned, it will be understood that this may be generalized to incorporate spatio-temporal processing as described above.

Several ways of determining complex valued weight vector $w_r$ for a particular signal of interest are possible within the scope of the present invention. In the preferred embodiment, the knowledge that the received signals have a particular modulation format is used to determine $w_r$ from the received signals themselves. A description how such an estimate of complex valued weight vector $w_r$ for a particular signal of interest is obtained, and how one demodulates the signal sent from such one particular remote terminal in the presence of the other signals from remote terminals, that is, in the presence of co-channel interferers is described in aforementioned U.S. Patent application Serial Number 08/729,390 filed October 11, 1996, entitled *Method and Apparatus for Decision Directed Demodulation Using Antenna Arrays and Spatial Processing* (hereinafter "Our Demodulation Invention Document").

To transmit a modulated signal $s_t(t)$ to some remote user, one applies signals $z_{t1}(t)$, $z_{t2}(t)$, ..., $z_{tm}(t)$, respectively, to the $m$ antennas, where $z_{ti}(t) = w'_{ti} s_t(t)$, $i = 1, ..., m$, and $w_{ti}$ is a complex valued weight. The set of $w_{ti}$ can be summarized by $w_t$, a complex valued $m$-dimensional column vector with $i^{th}$ element $w_{ti}$, called the *transmit weight vector* for that user. That is, denoting the $m$ signals at the $m$ antennas by the column vector $z_t(t)$, with $i^{th}$ element $z_{ti}(t)$, $i=1,..., m$, one has

$$\mathbf{z}_t(t) = \mathbf{w}'_t s_t(t),$$

where $\mathbf{w}'_t$ denotes the complex conjugate of vector $w_t$.

One alternatively can use spatio-temporal processing to transmit to the remote subscriber unit. In such a case, the transmit weight vector has elements which are functions of time (convolution kernels), and $z_{ti}(t) = w'_{ti}(t) * s_t(t)$, $i = 1, ..., m$. Using vector notation, $\mathbf{z}_t(t) = \mathbf{W}'_t(t) * s_t(t)$. Again, in the remainder of the description, whenever complex valued transmit weight vector $w_t$ or its elements are mentioned, it will be understood that this may be generalized to incorporate spatio-temporal processing as described above.

The system of the preferred embodiment uses TDD, so that the transmit and receive frequencies are known to be the same. The well known principle of reciprocity is used to determine the transmit weight vector for a particular user from the receive weight vector for that user, such receive weight vector determined from the received signals from that user.

In practice, the actual weight vector calculated would be for signals received at the antenna elements, but used on and possibly calculated from signals received at the end of the receiver apparatus chain, thus would contain not only information about the uplink propagation paths to each antenna element of the base station antenna array but also the amplitude and phase errors introduced by each of the receiver apparatus chains associated with each antenna element. Consequently, a receive weight vector determined from these signals does not use an accurate representation of the characteristics of the propagation path between the base station and the subscriber station. Calibration data for the receive apparatus chain is needed for determining the propagation characteristics (gain and phase). A particular signal from one antenna element measured at the receiver would need to have relative phase advanced if that signal is delayed by the receiver apparatus chain relative to signals from other antenna elements. Similarly, in the downlink direction, a transmit weight determining what should be transmitted from the antenna elements would produce errors in the antenna elements if applied at the transmit signal processor because of the amplitude and phase errors introduced by each of the transmit apparatus chains associated with each antenna element. A particular weight vector element corresponding to a particular antenna element needs to have relative phase advanced if a signal sent at the signal processor is delayed by the transmit apparatus chain relative to other signals sent to the other antenna elements.

In one embodiment of the invention, $w_{ti} = H_i' w_{ri}$, where $H_i$ is a scalar calibration factor for the $i^{th}$ antenna receive and transmit apparatus chains, $i=1, ..., m$. In another embodiment, spatio-temporal processing is used for transmit processing as a result of calibrating for the receive and transmit apparatus chains, and in this case, in the frequency domain, $W_{ti}(k) = H_i'(k) w_{ri}$, where $H_i$ is a calibration factor for the $i^{th}$ antenna receive and transmit apparatus chains, $i=1, ..., m$. If the receiver processing also is spatio-temporal, then in the frequency domain, $W_{ti}(k) = H_i'(k) W_{ri}(k), i=1, ..., m.$

In the preferred embodiment, when reception and transmission to a particular remote user is carried out, the calibration which is applied to an element of the transmit weight vector obtained from the receive weight vector is, in phase, a function of the difference in the phases between the transmit chain phase and the receive chain phase for the signals corresponding to that element.

The experiment performed at the base station to determine the calibration factors is now described. In one aspect of the invention, the experiment uses a base station of the general architecture shown in Figure 1, and is constrained to using the base station itself. Such a base station includes an antenna array 103 of antenna elements, each antenna element having a corresponding transmit apparatus chain from the message signal input through to the antenna element, and a corresponding receiver apparatus chain from antenna element, through to, and including, a receive signal processor. In addition, a transmit signal processor, possibly the receive signal processor, is included in the base station for generating calibration test signals and extracting calibration data from received signals.

Preferably the hardware implementing the preferred embodiment of the present invention is as shown in Figure 2.

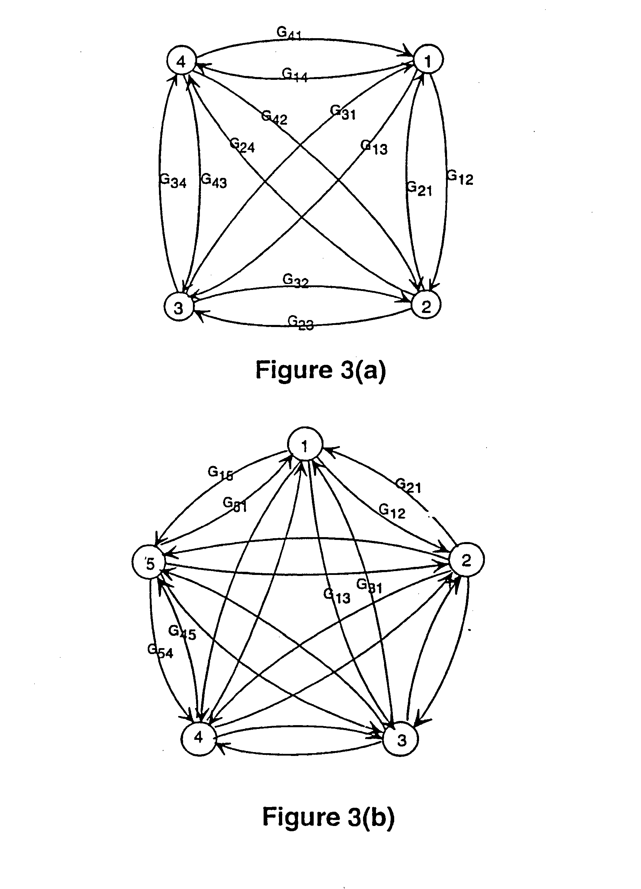

The basic method of the calibration experiment involves transmitting a known signal using the transmitter apparatus chain associated with one of $m$ antenna elements while receiving the transmitted signal on each of the other ($m$-1) antenna elements and through each of the ($m$-1) associated receiver apparatus chains. Figure 3(a) shows the pertinent propagation paths for an antenna array with four antenna elements while Figure 3(b) shows the propagation paths for a five element antenna array. The numbered nodes represent antenna elements while the interconnecting directional arrows indicate duplex paths, and the associated set of labels, $\{G_{ij}\}$, indicate the gain and phase shift associated with each path. The number of duplex paths, $m(m$-1)/2, increases quadratically with the number of antenna elements in an array. Note that not all labels $\{G_{ij}\}$ are shown on Figure 3(b).

Thus, in the four antenna case, four transmissions are made, each from one of the antennas in the array, and measurements are made for each transmission of the three receivers not transmitting.

Each signal in the set of received signals, in baseband, $\{s_{ij}(t)\}$, is a sampled function of time ($t$) and each member of the set may be represented as:

$$s_{ij}(t) = s_i(t) * \tau_i(t) * g_{ij}(t) * r_j(t), i, j = 1, ..., 4, \qquad \text{Eqn. (1)}$$

where:

$s_{ij}(t)$ is a time series (*i.e.,* a set of samples) representing the signal, in baseband, transmitted from antenna *i* and received by antenna *j*;

$s_i(t)$ is the time series calibration signal, in baseband, transmitted from antenna *i*;

$\tau_i(t)$ is a convolution kernel representative of the baseband transfer function of transmit chain *i*;

$g_{ij}(t)$ is a convolution kernel representative of the transfer function of the propagation path between antennas *i* and *j*;

$r_j(t)$ is a convolution kernel representative of the transfer function of the receive apparatus chain; and

\* represents the convolution operator.

Eqn. (1) may be expressed by the equivalent frequency domain (Fourier transform) representation as:

$$S_{ij}(k) = S_i(k) \cdot T_i(k) \cdot G_{ij}(k) \cdot R_j(k)$$

where each of the terms are Fourier transforms of the corresponding terms of Eqn. (1) and are complex frequency domain functions (having an associated amplitude and phase) for each value of the independent discrete frequency argument *k*. Thus, the frequency domain and corresponding time domain functions may be expressed as follows:

$S_{ij}(k) \Leftrightarrow s_{ij}(t)$ is the frequency domain and time domain received signal:

$S_i(\text{k}) \Leftrightarrow s_i(t)$ is the frequency domain and time domain transmitted signal by the $i^{th}$ transmitter chain;

$T_i(k) \Leftrightarrow \tau_i(t)$ is the frequency domain transfer function and time domain convolution kernel of the $i^{th}$ transmitter chain (including the $i^{th}$ transmitter antenna element);

$G_{ij}(k) \Leftrightarrow g_{ij}(t)$ is the frequency domain transfer function and time domain convolution kernel of the propagation path from the $i^{th}$ to the $j^{th}$ antenna element; and

$R_j(k) \Leftrightarrow r_j(t)$ is the frequency domain transfer function and time domain convolution kernel of the receiver chain (including the $j^{th}$ receiver antenna element).

In the preferred PHS embodiment using the system of Figure 2, *m* = 4. Thus, a known signal is transmitted by one antenna element and simultaneously received on the remaining (*m*-1) = 3 antenna elements. It is important to note that both the receiver and transmitter capabilities of the base station are being used simultaneously and due to the proximity of the transmitting antenna element and the receiving antenna elements the propagation losses are very small (about 30 dB). The same procedure is repeated for a total *m* sets of measurements using for each set a different antenna element to transmit to the remaining *m*-1 antennas and results in *m* sets of *m*-1 measured signals for a total of *m*(*m*-1) measurements (12 in the preferred embodiment). In the preferred embodiment, because of the small propagation path losses, the weights applied to each receiver are scaled down in order not to saturate the receivers.

Not known are the *m* transmitter chain calibrations (the $\{T_i\}$), the *m* receiver chain calibrations (the $\{R_j\}$), and the transfer functions of twice the number of paths (the *m*(*m*-1)/2 $G_{ij}$) between each antenna and the remaining *m*-1 antennas. Hence the total number of unknowns is *m*(*m*+1) which is 20 in the case of *m* = 4, and the number of equations that can be formed by measurements is 12. The number of unknowns to be determined may be reduced as follows. Assuming reciprocity, as applies for a TDD system, the paths between each antenna and the remaining *m*-1 antennas are the same in either direction, so that there are *m*(*m*-1)/2 less unknowns, for a total of *m*(*m*+3)/2 unknowns, 14 in the case of *m* = 4. Since in one aspect, one is primarily interested in *relative* receive and transmit calibration factors, one may assume that one of the transmit and one of the receive transfer functions are 1.0. In the preferred embodiment, one assumes $R_1(k) = T_1(k) = 1.0$ for all *k*. Thus, for *m*=4, the following twelve equations need to be solved:

$$S_{12} = G_{12}R_2$$

$$S_{13} = G_{13}R_3$$

$$S_{14} = G_{14}R_4$$

$$S_{21} = T_2 G_{21}$$

$$S_{23} = T_2 G_{23}R_3$$

$$S_{24} = T_2 G_{24}R_4$$

$$S_{31} = T_3 G_{31}$$

$$S_{32} = T_3 G_{32}R_2$$

$$S_{34} = T_3 G_{34}R_4$$

$$S_{41} = T_4 G_{41}$$

$$S_{42} = T_4 G_{42}R_2$$

$$S_{43} = T_4 G_{43}R_3$$

Eqns. (2)

These equations may be linearized by taking the logarithm of both sides, *e.g.* logarithms to the base *e*, defined as function $\log_e(x) = 1nx$. The resulting equations are

$$
\begin{bmatrix}
1 & 0 & 0 & 0 & 0 & 0 & 1 & 0 & 0 & 0 & 0 & 0 \\
0 & 1 & 0 & 0 & 0 & 0 & 0 & 1 & 0 & 0 & 0 & 0 \\
0 & 0 & 1 & 0 & 0 & 0 & 0 & 0 & 1 & 0 & 0 & 0 \\
0 & 0 & 0 & 1 & 0 & 0 & 1 & 0 & 0 & 0 & 0 & 0 \\
0 & 1 & 0 & 1 & 0 & 0 & 0 & 0 & 0 & 1 & 0 & 0 \\
0 & 0 & 1 & 1 & 0 & 0 & 0 & 0 & 0 & 0 & 1 & 0 \\
0 & 0 & 0 & 0 & 1 & 0 & 0 & 1 & 0 & 0 & 0 & 0 \\
1 & 0 & 0 & 0 & 1 & 0 & 0 & 0 & 0 & 1 & 0 & 0 \\
0 & 0 & 1 & 0 & 1 & 0 & 0 & 0 & 0 & 0 & 0 & 1 \\
0 & 0 & 0 & 0 & 0 & 1 & 0 & 0 & 1 & 0 & 0 & 0 \\
1 & 0 & 0 & 0 & 0 & 1 & 0 & 0 & 0 & 0 & 1 & 0 \\
0 & 1 & 0 & 0 & 0 & 1 & 0 & 0 & 0 & 0 & 0 & 1
\end{bmatrix}
\begin{bmatrix}
\ln R_2 \\
\ln R_3 \\
\ln R_4 \\
\ln T_2 \\
\ln T_3 \\
\ln T_4 \\
\ln G_{12} \\
\ln G_{13} \\
\ln G_{14} \\
\ln G_{23} \\
\ln G_{24} \\
\ln G_{34}
\end{bmatrix}
=
\begin{bmatrix}
\ln S_{12} \\
\ln S_{13} \\
\ln S_{14} \\
\ln S_{21} \\
\ln S_{23} \\
\ln S_{24} \\
\ln S_{31} \\
\ln S_{32} \\
\ln S_{34} \\
\ln S_{41} \\
\ln S_{42} \\
\ln S_{43}
\end{bmatrix}
.
$$

Eqn.(3)

To obtain separate calibration for the receiver chain and transmit chain, these equations need to be solved. It was found that explicit solution may need further assumptions.

In the preferred embodiment, the receive weights, for example in the frequency domain are determined without calibration, and the frequency domain transmit weight vector is the frequency domain receive weight vector multiplied by a (frequency dependent) *m* by *m* diagonal calibration matrix determined by a calibration vector. In the preferred embodiment, each transmit weight vector element is the corresponding receive weight vector multiplied at each frequency by the ratio of receive apparatus chain response to transmit apparatus chain response for the particular element. To see that this in principle gives the correct calibration on transmit, consider that on reception with a single user, a signal (the spatial signature a of $i^{th}$ element $a_i$) arrives at antenna *i* later than at antenna *j* (positive phase). Suppose also that the receiver apparatus chain causes that signal arriving at antenna *i* to take longer arrive at the signal processor than the signal which arrives at antenna $j$ (positive phase). Let $G_i$ describe the air path from the remote user to the $i^{th}$ antenna element and that suppose a unit signal is sent from the remote user. Then the $i^{th}$ element of a is the signal at the $i^{th}$ antenna element, $G_i$. The signal received at the signal processor is $G_iR_i$. This means that the receive weight vector would have $i^{th}$ element proportional to $G_iR_i$. If one follows the preferred strategy, one would transmit a signal proportional to $G_i'R_i'$ at the transmit electronics (in other words, with a weight vector with $i^{th}$ element proportional to $G_iR_i$), which would lead to a signal at the $i^{th}$ antenna element proportional to $G_i'R_i'T_i$, (equivalent to transmitting with a weight vector with $i^{th}$ element *at the antenna* proportional to $G_iR_iT_i'$). It is desired, according to the preferred strategy to transmit with a signal at the $i^{th}$ antenna element proportional to $G_i'$, that is, with a weight vector with $i^{th}$ element *at the antenna* proportional to $G_i$. To achieve this, a calibration factor of $R_i/T_i$ for the $i^{th}$ element transmitted signal is required, noting that $R_i'$ is proportional to $1/R_i$. This is the same as applying a transmit weight vector element calibration factor proportional to $R_i'/T_i'$. Define calibration factor $H_i = R_i/T_i$.

Thus, in one aspect of the invention, in the calibration procedure for $m=4$, one receives twelve signals from four sets of measurements. Defining (frequency domain) signal ratios $Q_{ij}$ by

$$Q_{ij} = S_{ij}/S_{ji}$$

where the division is between for each element, and where, as before, $S_{ij}$ is the signal transmitted from the $i^{th}$ antenna and received at the $j^{th}$ antenna element. Then, using reciprocity ($G_{ij} = G_{ji}$),

$$Q_{ij} = T_iR_j/R_iT_j = H_j/H_i$$

where as above, calibration factors $H_i$ is the ratio of the receive chain transfer function $R_i$ to transmit chain transfer function $T_i$ for the $i^{th}$ channel. The twelve equations result in six ratios. Since one is interested in relative calibration, define $H_1 = 1.0$. Other calibrations are then determined relative to one particular channel, arbitrarily the first channel. Several ways of forming a sufficient number of equations to solve are possible. The following equations may be used.

$$H_1 = 1.0$$
$$H_2 = Q_{12}H_1 = Q_{12} = S_{12}/S_{21}$$
$$H_3 = Q_{13}H_1 = Q_{31} = S_{13}/S_{31}$$
$$H_4 = Q_{14}H_1 = Q_{14} = S_{14}/S_{41} \qquad \text{Eqns. (4)}$$
$$H_3 = Q_{23}H_2$$
$$H_4 = Q_{24}H_2$$
$$H_4 = Q_{34}H_3$$

In one embodiment, the first four equations in Eqns. (4) give the calibration factors to use, so that the calibration factor for an element relative to a reference element (*e.g.*, $H_2$ relative to $H_1$) is the ratio of the signal sent from the reference element and received at the element (*e.g.*, $S_{12}$) to the signal sent from the element and received at the reference element (*e.g.*, $S_{21}$).

In an alternate embodiment, these calibration factors are then checked for consistency with the equations $H_3=Q_{23}H_2$, $H_4=Q_{24}H_2$, and $H_4=Q_{34}H_2$, multiplying each calibration factor obtained one way with the complex conjugate of the same factor determined another way gives a number whose phase is a measure of the phase error. In the alternate embodiment, a threshold is used to flag an unacceptable phase error, and the flag can then be used to cause repeating the calibration procedure.

In another embodiment, all equations are solved in a least squared sense using linearization of Eqns. (4), which may be linearized by taking the logarithm of each side, solving the overdetermined set of equations, and finally compute the three calibration constants by reconverting the results from log space. The linearized equations are:

$$\ln H_2 = \ln Q_{12}$$

$$\ln H_3 = \ln Q_{13}$$

$$\ln H_4 = \ln Q_{14}$$

$$\ln H_3 = \ln Q_{23} + \ln H_2$$

$$\ln H_4 = \ln Q_{24} + \ln H_2$$

$$\ln H_4 = \ln Q_{34} + \ln H_3$$

These can be expressed in the following matrix format:

$$\begin{bmatrix} 1 & 0 & 0 \\ 0 & 1 & 0 \\ 0 & 0 & 1 \\ -1 & 1 & 0 \\ -1 & 0 & 1 \\ 0 & -1 & 1 \end{bmatrix} \begin{bmatrix} \ln H_2 \\ \ln H_3 \\ \ln H_4 \end{bmatrix} = \begin{bmatrix} \ln Q_{12} \\ \ln Q_{13} \\ \ln Q_{14} \\ \ln Q_{23} \\ \ln Q_{24} \\ \ln Q_{34} \end{bmatrix},$$

which results in the following solutions:

$$\ln H_2 = 0.5\ln Q_{12} + 0.25\ln Q_{13} + 0.25\ln Q_{14} - 0.25\ln Q_{23} - 0.25\ln Q_{24},$$

$$\ln H_3 = 0.25\ln Q_{12} + 0.5\ln Q_{13} + 0.25\ln Q_{14} + 0.25\ln Q_{23} - 0.25\ln Q_{34}, \qquad \text{Eqns. (5)}$$

$$\ln H_4 = 0.25\ln Q_{12} + 0.25\ln Q_{13} + 0.5\ln Q_{14} + 0.25\ln Q_{24} + 0.25\ln Q_{34},$$

which must now be converted to linear terms using

$$H_2 = \exp(\ln H_2),$$

$$H_3 = \exp(\ln H_3), \text{ and} \qquad\qquad \text{Eqns. (6)}$$

$$H_4 = \exp(\ln H_4).$$

In the above discussion, transfer functions are used for the calibration of the communication system. The computation of transfer functions is well known in the art. Transfer functions are generally functions of the independent frequency argument which implies that multiple frequency (or broad band) signals and functions are involved. However, if the transfer function magnitude is relatively uniform and has an approximately linear phase characteristic over the signal band, all the transfer functions are constant in the band of interest (300 kHz in the case of the preferred embodiment). In such a case, the ratios $Q_{ij}$ may be replaced by ratios calculated in the time domain as follows:

$$Q_{ij} = \left.\sum_t s'_{ji}(t)s_{ij}(t) \middle/ \sum_t \left|s_{ji}(t)\right|^2\right.$$

where the summations are over all the samples of interest, or, in an alternate embodiment, a subset of the samples received. The resulting calibration factors $H_i$, $i$=1, ..., $m$ also are complex valued (*i.e.,* phase and amplitude) scalars, and the resulting transmit weight vector elements also are complex valued scalars if the corresponding receive weight vector elements are scalar.

In the preferred embodiment, using the apparatus of Figure 2, a standard SYNCH burst (See Our Demodulation Invention Document for details of a SYNCH burst) is sent through one of the four antennas in four consecutive receive timeslots. In alternate embodiments, transmit timeslots may be used and/or other known signals may be used for transmission. The complex valued (in phase and quadrature) receiver signal outputs from each of the three receiver apparatus chains connected to the non-transmitting antennas are measured. In the preferred apparatus of Figure 2, timeslot processors **317** are used.

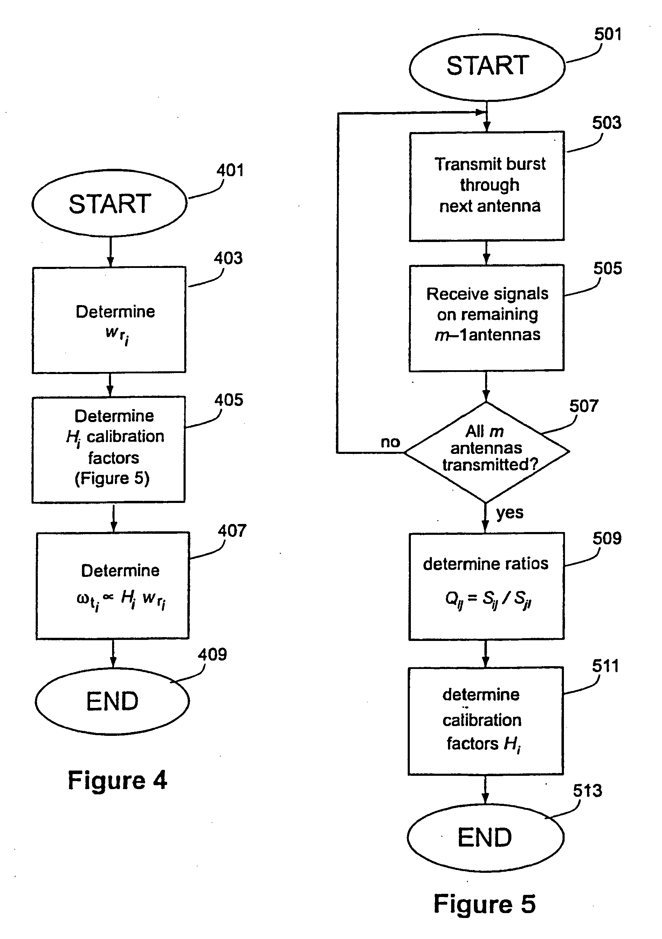

One aspect of the invention is using calibrated downlink weights obtained from uplink weights and calibration factors. A flow chart for determining downlink weights using calibration is shown in Figure 4. Step **403** is determining the uplink weights $w_{ri}$, $i$=1, ..., $m$. In the preferred embodiment for the base station described by Figure 2, determining uplink weights is as described in Our Demodulation Invention Document. Step **405** is determining calibration factors $H_t$ $(k)=R_i(k)/T_t(k)$. The preferred embodiment for step **405**, determining calibration factors is described by the flow chart of Figure 5 and determines non frequency-dependent calibration factors. In step **407**, the calibration factors from step **405** and the receive weights from step **403** are used to determine transmit weights by multiplying the receive weight vector element by the complex conjugate of the corresponding calibration factor. The relative magnitudes of the transmit weight vector elements are determined in this step **407**, while the overall magnitude is determined as part of power control.

An embodiment of step **405**, determining the calibration factors, is described with the help of the flow chart of Figure 5. Steps **503** and **505** are carried out for each of the $m$ antenna elements. Many ways of ensuring this are possible. In the flow chart one such method is used: step **507** determines if steps **503** and **505** have been carried out for all antenna elements. If not, steps **503** and **505** are repeated for another antenna element until all have been traversed. In step **503**, a burst, preferably a SYNCH burst, is transmitted through an antenna element not yet traversed. In step **505**, carried out during transmission step **503**, signals received in the remaining ($m$ - 1) antennas as a result of transmission step **503** are obtained. Preferably, the in phase and quadrature values are determined using the receiver apparatus chain associated with the particular antenna element. When the embodiment of Figure 2 of the overall system of Figure 1 is used, during step **503**, the duplexer switch **107** is put in the transmit mode for the transmitting antenna and in the receive mode for the other $m$-1 antennas. The transmit apparatus chain **121** is used for transmitting, and the receiver apparatus chain **113** is used for receiving. When using the apparatus of Figure 2, host DSP **231** and RF/Timing controller **133** are used to control steps **503** and **505**. Timeslot processors **217** for the particular timeslot are used to receive the signals during step **505**.

In step **509**, the ratios are determined of the signal received by some antenna element (when receiving) from another antenna element (when transmitting) to the signal received by that other antenna element (when receiving) when a signal is transmitted by said some antenna element (when transmitting). In one embodiment, this ratio is determined in the frequency domain. In another embodiment, including that using the apparatus of Figure 2, in which a SYNCH pulse is transmitted, a set of time samples is used, the time samples corresponding to a subset of the samples of the SYNCH pulse, and the ratio, a complex valued scalar denoted $Q_{ij}$, is determined using

$$Q_{ij} = \frac{\sum_t s_{ji}^*(t)s_{ij}(t)}{\sum_t |s_{ji}(t)|^2}$$

where the summation is over said subset of samples.

In step 511, using the ratios determined in step 509, calibration factors are determined relative to one antenna element, denoted the reference. As described hereinabove, in one embodiment, the first four equations in Eqns. (4) are used give the calibration factors, so that the calibration factors relative to a reference element are the ratio of the signal sent from the reference element and received at the element to the signal sent from the element and received at the reference element. Also as described hereinabove, in another embodiment, the first four equations in Eqns. (4) are used give the calibration factors directly, and step 519 further involves a consistency check using the last three equations of Eqns. (4). In yet another embodiment, Eqns. (5) and (6) are used to obtain the calibration factors.

In the embodiment using the apparatus of Figure 2, the calibration factors are determined by host DSP 231 and are based on scalar ratios. In other embodiments, frequency domain calibrations factors are obtained.

In non-TDD, for example, FDD systems, once a procedure for determining uncalibrated transmit weights from received signals or from receive weights is used, different embodiments of the method of the invention may be used to achieve calibration.

The method would need to be modified only to account for the difference in transmission frequencies and receiving frequencies.

While the above is a complete description of specific embodiments of the invention, those embodiments are only for illustrative purposes, and various modifications, alternative constructions, and equivalents may be used. Therefore, the above description should not be taken as limiting the scope of the invention. It is intended that the scope of the invention be defined by the claims appended hereto.

## Claims

1. A method for calibrating a communications station, the method comprising:

   switching from a normal mode to a calibration mode by a digital signal processor (231) of a communications station having an antenna array (103) with a plurality of antenna elements, each antenna element i being included in a transmit apparatus chain and a receiver apparatus chain, the relative phase and amplitude of each transmit apparatus chain essentially describable by a transmit apparatus chain transfer function $T_i$ for that transmit apparatus chain, the relative phase and amplitude of each receiver apparatus chain essentially describable by a receiver apparatus chain transfer function $R_i$ for that receiver apparatus chain;
   transmitting (503) a first signal through the transmit apparatus chain of a first antenna element in the antenna array (103) and from the first antenna element;
   receiving (505) the first signal at remaining antenna elements other than the first antenna element and through the receiver apparatus chain of each said remaining antenna element;
   transmitting (503, 507) a respective signal through the transmit apparatus chain of each of the remaining antenna elements of the antenna array other than the first antenna element and receiving the respective signal in the receiver apparatus chains of each of the remaining antenna elements other than the transmitting antenna element until all antenna elements of the antenna array for which calibration factors are to be determined have transmitted their respective signals;
   determining a signal ratio $Q_{ij}=S_{ij}/S_{ji}$ for each combination of antenna elements i,j, where $S_{ij}$ is the signal transmitted through the ith transmit apparatus chain and from the ith antenna element and received at the jth antenna element and through the jth receiver apparatus chain;
   determining (509, 511), for each antenna element i, a calibration factor $H_i$ relative to the first antenna element defined by $H_i=R_i/T_i$ using the determined signal ratios and relationship $Q_{ij}=H_j/H_i$;
   scaling the determined calibration factor by a value via an automatic gain compensation circuit; and
   switching from the calibration mode to the normal mode by the digital signal processor (231).

2. The method of claim 1 further comprising designating the first antenna element as a reference antenna element having a calibration factor $H_1=1$.

3. A method for sending a downlink signal from a communications station comprising an antenna array to a subscriber unit, the method comprising:

calibrating the communications station by a method according to any preceding claim;
receiving by the antenna array an uplink signal from the subscriber unit;
determining (403) a receive weight for the antenna array based on the uplink signal;
applying (407) a calibration factor determined during the step of calibrating to the receive weight to generate a transmit weight for the antenna array by multiplying the calibration factor to the receive weight for the antenna array;
applying the transmit weight to the downlink signal from the antenna array to the subscriber unit; and
transmitting the weighted downlink signal to the subscriber unit.

4. A communications station comprising:

an antenna array (103) having a plurality of antenna elements;
a transmit apparatus chain (121) associated with each antenna element i, each transmit apparatus chain including its associated antenna element, the relative phase and amplitude of each transmit apparatus chain essentially describable by a transmit apparatus chain transfer function $T_i$ for that transmit apparatus chain;
a receiver apparatus chain (113) associated with each antenna element i, each receiver apparatus chain including its associated antenna element, the relative phase and amplitude of each receiver apparatus chain essentially describable by a receiver apparatus chain transfer function $R_i$ for that receiver apparatus chain;
a memory coupled to the receiver apparatus chains to store received signals;
a signal processor (231) coupled to the memory and adapted to switch between a normal mode and a calibration mode of the communications station; and
transmitting means configured, when the communications station is in the calibration mode, to transmit a first signal through the transmit apparatus chain of a first antenna element in the antenna array (103) and from the first antenna element, such that the first signal is received at remaining antenna elements other than the first antenna element and through the receiver apparatus chain of each said remaining antenna element, the transmitting means further configured to transmit a respective signal through the transmit apparatus chain of each of the remaining antenna elements of the antenna array other than the first antenna element and received in the receiver apparatus chains of each of the remaining antenna elements other than the transmitting antenna element until all antenna elements of the antenna array for which calibration factors are to be determined have transmitted their respective signals;
wherein the signal processor is further configured:

to determine a signal ratio $Q_{ij}=S_{ij}/S_{ji}$ for each combination of antenna elements i,j, where $S_{ij}$ is the signal transmitted through the $i^{th}$ transmit apparatus chain and from the $i^{th}$ antenna element and received at the $j^{th}$ antenna element and through the $j^{th}$ receiver apparatus chain; and
to determine, for each antenna element i, a calibration factor $H_i$ relative to the first antenna element defined by $H_i=R_i/T_i$ using the determined signal ratios and relationship $Q_{ij}=H_j/H_i$;

and wherein the communications station further comprises automatic gain compensation circuitry to scale the calibration factor.

5. The communications station of claim 4, wherein the signal processor is configured to designate the first antenna element as a reference antenna element having a calibration factor $H_1=1$.

**Patentansprüche**

1. Verfahren zum Kalibrieren einer Kommunikationsstation, wobei das Verfahren umfasst:

Umschalten von einer normalen Betriebsart zu einer Kalibrierungsbetriebsart durch einen digitalen Signalprozessor (231) einer Kommunikationsstation, die eine Antennenanordnung (103) mit einer Vielzahl von Antennenelementen hat, wobei jedes Antennenelement i in einer Sendevorrichtungskette und einer Empfängervorrichtungskette eingeschlossen ist, wobei die relative Phase und Amplitude jeder Sendevorrichtungskette im wesentlichen durch eine Sendevorrichtungsketten-Übertragungsfunktion $T_i$ für diese Sendevorrichtungskette beschreibbar ist, wobei die relative Phase und Amplitude jeder Empfängervorrichtungskette im wesentlichen durch eine Empfängervorrichtungsketten-Übertragungsfunktion $R_i$ für diese Empfängervorrichtungskette beschreibbar ist;

Senden (503) eines ersten Signals über die Sendevorrichtungskette eines ersten Antennenelements in der Antennenanordnung (103) und vom ersten Antennenelement;

Empfangen (505) des ersten Signals in übrigen Antennenelementen, die nicht das erste Antennenelement sind, und über die Empfängervorrichtungskette jedes übrigen Antennenelements;

Senden (503, 507) eines jeweiligen Signals über die Sendevorrichtungskette jedes der übrigen Antennenelemente der Antennenanordnung, die nicht das erste Antennenelement sind, und Empfangen des jeweiligen Signals in den Empfängervorrichtungsketten jedes der übrigen Antennenelemente, die nicht das sendende Antennenelement sind, bis alle Antennenelemente der Antennenanordnung, für die Kalibrierungsfaktoren zu bestimmen sind, ihre jeweiligen Signale gesendet haben;

Bestimmen eines Signalverhältnisses $Q_{ij} = S_{ij}/S_{ji}$ für jede Kombination von Antennenelementen i, j, worin $S_{ij}$ das über die i-te Sendevorrichtungskette und vom i-ten Antennenelement gesendete und im j-ten Antennenelement und über die j-te Empfängervorrichtungskette empfangene Signal ist;

Bestimmen (509, 511) eines durch $H_i=R_t/T_i$ definierten Kalibrierungsfaktors $H_i$ für jedes Antennenelement i relativ zum ersten Antennenelement unter Verwendung der bestimmten Signalverhältnisse und der Beziehung $Q_{ij} = H_j/H_i$;

Skalieren des bestimmten Kalibrierungsfaktors um einen Wert mittels einer Schaltung zur automatischen Verstärkungskompensation; und

Umschalten von der Kalibrierungsbetriebsart zur normalen Betriebsart durch den digitalen Signalprozessor (231).

2. Verfahren nach Anspruch 1, ferner umfassend: Festlegen des ersten Antennenelements als Referenzantennenelement mit einem Kalibrierungsfaktor $H_1 = 1$.

3. Verfahren zum Senden eines Abwärtsstreckensignals von einer Kommunikationsstation, die eine Antennenanordnung umfasst, an eine Teilnehmereinheit, wobei das Verfahren umfasst:

Kalibrieren der Kommunikationsstation durch ein Verfahren nach einem der vorhergehenden Ansprüche;

Empfangen eines Aufwärtsstreckensignals von der Teilnehmereinheit durch die Antennenanordnung;

Bestimmen (403) eines Empfangsgewichts für die Antennenanordnung auf der Grundlage des Aufwärtsstreckensignals;

Anwenden (407) eines während des Kalibrierungsschritts bestimmten Kalibrierungsfaktors auf das Empfangsgewicht, um durch Multiplizieren des Kalibrierungsfaktors mit dem Empfangsgewicht für die Antennenanordnung ein Sendegewicht für die Antennenanordnung zu erzeugen;

Anwenden des Sendegewichts auf das Abwärtsstreckensignal von der Antennenanordnung an die Teilnehmereinheit; und

Senden des gewichteten Abwärtsstreckensignals an die Teilnehmereinheit.

4. Kommunikationsstation, umfassend:

eine Antennenanordnung (103) mit einer Vielzahl von Antennenelementen;

eine jedem Antennenelement i zugeordnete Sendevorrichtungskette (121), wobei jede Sendevorrichtungskette ihr zugeordnetes Antennenelement einschließt, wobei die relative Phase und Amplitude jeder Sendevorrichtungskette im wesentlichen durch eine Sendevorrichtungsketten-Übertragungsfunktion $T_i$ für diese Sendevorrichtungskette beschreibbar ist;

eine jedem Antennenelement i zugeordnete Empfängervorrichtungskette (113), wobei jede Empfängervorrichtungskette ihr zugeordnetes Antennenelement einschließt, wobei die relative Phase und Amplitude jeder Empfängervorrichtungskette im wesentlichen durch eine Empfängervorrichtungsketten-Übertragungsfunktion $R_i$ für diese Empfängervorrichtungskette beschreibbar ist;

einen Speicher, der mit den Empfängervorrichtungsketten gekoppelt ist, um empfangene Signale zu speichern;

einen Signalprozessor (231), der mit dem Speicher gekoppelt und dafür eingerichtet ist, zwischen einer normalen Betriebsart und einer Kalibrierungsbetriebsart der Kommunikationsstation umzuschalten; und

Sendemittel, die dafür konfiguriert sind, wenn die Kommunikationsstation in der Kalibrierungsbetriebsart ist, ein erstes Signal über die Sendevorrichtungskette eines ersten Antennenelements in der Antennenanordnung (103) und vom ersten Antennenelement zu senden, so dass das erste Signal in übrigen Antennenelementen, die nicht das erste Antennenelement sind, und über die Empfängervorrichtungskette jedes übrigen Antennenelements empfangen wird, wobei die Sendemittel ferner dafür konfiguriert sind, ein jeweiliges Signal über die Sendevorrichtungskette jedes der übrigen Antennenelemente der Antennenanordnung, die nicht das erste Antennenelement sind, zu senden und in den Empfängervorrichtungsketten jedes der übrigen Antennenelemente, die nicht das sendende Antennenelement sind, zu empfangen, bis alle Antennenelemente der Antennenanordnung, für die Kalibrierungsfaktoren zu bestimmen sind, ihre jeweiligen Signale gesendet haben; worin der Signalprozessor ferner dafür konfiguriert ist:

ein Signalverhältnis $Q_{ij} = S_{ij}/S_{ji}$ für jede Kombination von Antennenelementen i, j zu bestimmen, worin $S_{ij}$ das über die i-te Sendevorrichtungskette und vom i-ten Antennenelement gesendete und im j-ten Antennenelement und über die j-te Empfängervorrichtungskette empfangene Signal ist; und einen durch $H_i = R_i/T_i$ definierten Kalibrierungsfaktor $H_i$ für jedes Antennenelement i relativ zum ersten Antennenelement unter Verwendung der bestimmten Signalverhältnisse und der Beziehung $Q_{ij} = H_j/H_i$ zu bestimmen; und worin die Kommunikationsstation ferner eine Schaltungsanordnung zur automatischen Verstärkungskompensation umfasst, um den Kalibrierungsfaktor zu skalieren.

5. Kommunikationsstation nach Anspruch 4, worin der Signalprozessor dafür konfiguriert ist, das erste Antennenelement als Referenzantennenelement mit einem Kalibrierungsfaktor $H_1 = 1$ festzulegen.

## Revendications

1. Procédé pour étalonner une station de communication, le procédé comprenant les étapes suivantes :

commuter d'un mode normal en un mode d'étalonnage par l'intermédiaire d'un processeur de signal numérique (231) d'une station de communication ayant un réseau d'antennes (103) avec une pluralité d'éléments d'antenne, chaque élément d'antenne i étant compris dans une chaîne d'appareils de transmission et une chaîne d'appareils de réception, l'amplitude et la phase relative de chaque chaîne d'appareils de transmission étant essentiellement descriptible par une fonction de transfert de chaîne d'appareils de transmission $T_i$ pour cette chaîne d'appareils de transmission, l'amplitude et la phase relative de chaque chaîne d'appareils de réception étant essentiellement descriptible par une fonction de transfert de chaîne d'appareils de réception $R_i$ pour cette chaîne d'appareils de réception ;
transmettre (503) un premier signal par l'intermédiaire de la chaîne d'appareils de transmission d'un premier élément d'antenne dans le réseau d'antennes (103) et depuis le premier élément d' antenne ;
recevoir (505) le premier signal au niveau d'éléments d'antenne restants autres que le premier élément d'antenne et par l'intermédiaire de la chaîne d'appareils de réception de chacun desdits éléments d'antenne restants ;
transmettre (503, 507) un signal respectif par l'intermédiaire de la chaîne d'appareils de transmission de chacun des éléments d'antenne restants du réseau d'antennes autres que le premier élément d'antenne et recevoir le signal respectif dans les chaînes d'appareils de réception de chacun des éléments d'antenne restants autres que l'élément d'antenne de transmission jusqu'à ce que tous les éléments d'antenne du réseau d'antennes pour lesquels des facteurs d'étalonnage doivent être déterminés aient transmis leurs signaux respectifs ;
déterminer un rapport de signal $Q_{ij}=S_{ij}/S_{ji}$ pour chaque combinaison d'éléments d'antenne i, j, où $S_{ij}$ est le signal transmis par l'intermédiaire de l'i[ème] chaîne d'appareils de transmission et depuis l'i[ème] élément d'antenne et reçu au niveau du j[ème] élément d'antenne et par l'intermédiaire de la j[ème] chaîne d'appareils de réception ;
déterminer (509, 511), pour chaque élément d'antenne i, un facteur d'étalonnage $H_i$ relativement au premier élément d'antenne défini par $H_i = R_i/T_i$ en utilisant les rapports de signaux déterminés et la relation $Q_{ij}=H_j/H_i$;
mettre à l'échelle le facteur d'étalonnage déterminé par une valeur par l'intermédiaire d'un circuit de compensation de gain automatique ;
commuter du mode d'étalonnage en mode normal par l'intermédiaire du processeur de signal numérique (231).

2. Procédé selon la revendication 1 comprenant en outre de désigner le premier élément d'antenne comme élément d'antenne de référence ayant un facteur d'étalonnage $H_1=1$.

3. Procédé pour envoyer un signal de liaison descendante depuis une station de communication comprenant un réseau d'antennes vers une unité d'abonné, le procédé comprenant les étapes suivantes :

étalonner la station de communication suivant un procédé selon l'une quelconque des revendications précédentes ;

recevoir par l'intermédiaire du réseau d'antennes un signal de liaison montante depuis l'unité d'abonné ;

déterminer (403), un poids de réception pour le réseau d'antennes sur la base du signal de liaison montante ;

appliquer (407) un facteur d'étalonnage déterminé au cours de l'étape d'étalonnage au poids de réception pour générer un poids de transmission pour le réseau d'antennes en multipliant le facteur d'étalonnage par le poids de réception pour le réseau d' antennes ;

appliquer le poids de transmission au signal de liaison descendante depuis le réseau d'antennes vers l'unité d'abonné ; et

transmettre le signal de liaison descendante pondéré vers l'unité d'abonné.

4. Station de communication comprenant :

un réseau d'antennes (103) ayant une pluralité d'éléments d'antenne ;

une chaîne d'appareils de transmission (121) associée à chaque élément d'antenne i, chaque chaîne d'appareils de transmission comprenant son élément d'antenne associé, l'amplitude et la phase relative de chaque chaîne d'appareils de transmission étant essentiellement descriptible par l'intermédiaire d'une fonction de transfert de chaîne d'appareils de transmission $T_i$, pour cette chaîne d'appareils de transmission;

une chaîne d'appareils de réception (113) associée à chaque élément d'antenne i, chaque chaîne d'appareils de réception comprenant son élément d'antenne associé, l'amplitude et la phase relative de chaque chaîne d'appareils de réception étant essentiellement descriptible par une fonction de transfert de chaîne d'appareils de réception $R_i$ pour cette chaîne d'appareils de réception ;

une mémoire couplée aux chaînes d'appareils de réception pour stocker des signaux reçus ;

un processeur de signal (231) couplé à la mémoire et conçu pour commuter entre un mode normal et un mode d'étalonnage de la station de communication ; et

un moyen de transmission configuré, lorsque la station de communication est en mode d'étalonnage, pour transmettre un premier signal par l'intermédiaire de la chaîne d'appareils de transmission d'un premier élément d'antenne dans le réseau d'antennes (103) et depuis le premier élément d'antenne, de manière à ce que le premier signal soit  reçu au niveau d'éléments d'antenne restants autres que le premier élément d'antenne et par l'intermédiaire de la chaîne d'appareils de réception de chacun desdits éléments d'antenne restants, le moyen de transmission étant en outre configuré pour transmettre un signal respectif par l'intermédiaire de la chaîne d'appareils de transmission de chacun des éléments d'antenne restants du réseau d'antennes autre que le premier élément d'antenne et reçu dans les chaînes d'appareils de réception de chacun des éléments d'antenne restants autres que l'élément d'antenne de transmission jusqu'à ce que tous les éléments d'antenne du réseau d'antennes pour lesquels des facteurs d'étalonnage doivent être déterminés aient transmis leurs signaux respectifs ;

où le processeur de signal est en outre configuré :

pour déterminer un rapport de signal $Q_{ij}=S_{ij}/S_{ji}$ pour chaque combinaison d'éléments d'antenne i, j, où $S_{ij}$ est le signal transmis par l'intermédiaire de l'$i^{ème}$ chaîne d'appareils de transmission et depuis l'$i^{ème}$ élément d'antenne et reçu au niveau du $j^{ème}$ élément d'antenne et par l'intermédiaire de la $j^{ème}$ chaîne d'appareils de réception ; et

pour déterminer, pour chaque élément d'antenne i, un facteur d'étalonnage $H_i$ relativement au premier élément d'antenne défini par $H_i=R_i/T_i$ en utilisant les rapports de signaux déterminés et la relation $Q_{ij}=H_j/H_i$; et où la station de communication comprend en outre un circuit de compensation de gain automatique pour mettre à l'échelle le facteur d'étalonnage.

5. Station de communication selon la revendication 4, dans laquelle le processeur de signal est configuré pour désigner le premier élément d'antenne comme élément d'antenne de référence ayant un facteur d'étalonnage $H_1=1$.

## Figure 1  (Prior Art)

**Figure 2**

**Figure 3(a)**

**Figure 3(b)**

**START** 401

Determine $w_{r_i}$ 403

Determine $H_i$ calibration factors (Figure 5) 405

Determine $\omega_{t_i} \propto H_i\, w_{r_i}$ 407

**END** 409

**Figure 4**

**START** 501

Transmit burst through next antenna 503

Receive signals on remaining $m-1$ antennas 505

All $m$ antennas transmitted? 507

no

yes

determine ratios $Q_{ij} = S_{ij} / S_{ji}$ 509

determine calibration factors $H_i$ 511

**END** 513

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5515378 A
- US 5592490 A
- US 73552096 A
- US 72939096 A

- US 5274844 A
- US 5546090 A
- WO 9534103 A

**Non-patent literature cited in the description**

- **AUMANN, H. et al.** Phase Array Antenna Calibration and Pattern Prediction Using Mutual Coupling Measurements. *IEEE Transactions on Antennas and Propagation,* July 1989, vol. 37 (7